# EUROPEAN PATENT SPECIFICATION

(11) **EP 2 563 499 B1**
(45) Date of publication and mention of the grant of the patent: **09.08.2017**
(21) Application number: 11714199.4
(22) Date of filing: 01.04.2011
(51) Int. Cl.: B01D 53/62, F23J 15/00

(54) **METHOD FOR REDUCING CO2 EMISSIONS IN A COMBUSTION STREAM AND INDUSTRIAL PLANTS UTILIZING THE SAME**
VERFAHREN ZUR VERRINGERUNG VON CO2-EMISSIONEN IN EINEM VERBRENNUNGSSTROM UND INDUSTRIENANLAGEN DAMIT
PROCÉDÉ DE RÉDUCTION DES ÉMISSIONS DE CO2 DANS UN FLUX DE COMBUSTION ET INSTALLATIONS INDUSTRIELLES METTANT EN OEUVRE CE PROCÉDÉ

(30) Priority: 30.04.2010 US 772001
(43) Date of publication of application: 06.03.2013
(73) Proprietor: General Electric Company, Schenectady, NY 12345 (US)
(72) Inventor: BOTERO, Cristina, Cambridge, MA 02139 (US); FINKENRATH, Matthias, Niskayuna, NY 12309 (US); GONZALES, Miguel, Angel, Niskayuna, NY 12309 (US)
(74) Representative: Illingworth-Law, William Illingworth
(86) International application number: PCT/US2011/030918
(87) International publication number: WO 2011/139444

(56) References cited:
- EP-A2- 0 887 530
- WO-A1-97/11310
- WO-A1-2009/098128
- WO-A1-2010/014520
- DE-A1-102007 053 192
- US-A- 5 271 215

## Description

### BACKGROUND

This application relates to reducing CO₂ emissions in combustion streams.

EP 0 887 530 A2 discloses a gas turbine with exhaust gas recirculation. A temperature of internal gas in a compressor is suppressed when recirculating gas turbine exhaust at partial load operation time.

Air pollution concerns worldwide have led to stricter emissions standards. These standards regulate the emission of oxides of nitrogen (NOx), unburned hydrocarbons (HC), carbon monoxide (CO), and carbon dioxide (CO₂), generated by the power industry. In particular, carbon dioxide has been identified as a greenhouse gas, resulting in various techniques being implemented to reduce the concentration of carbon dioxide being discharged to the atmosphere.

There are three generally recognized ways currently employed for reducing CO₂ emissions from such power stations. The first method is to capture CO₂ after combustion with air from the exhaust gas; wherein the CO₂ produced during the combustion is removed from the exhaust gases by an absorption process, adsorption process, membranes, diaphragms, cryogenic processes or combinations thereof. This method, commonly referred to as post-combustion capture, usually focuses on reducing CO₂ emissions from the atmospheric exhaust gas of a power station. A second method includes reducing the carbon content of the fuel. In this method, the fuel is first converted into H₂ and CO₂ prior to combustion. Thus, it becomes possible to capture the carbon content of the fuel before entry into the gas turbine and the formation of CO₂ is hence avoided. A third method includes an oxy-fuel process. In this method, pure oxygen is used as the oxidant as opposed to air, thereby resulting in a flue gas consisting of carbon dioxide and water.

The main disadvantage of the post-combustion CO₂ capture processes is that the CO₂ partial pressure is very low in the flue gas (typically 3-4% by volume for natural gas fired power plants). Although the CO₂ concentration at the stack and thus the partial pressure could be increased by partial recirculation of the flue gas to the compressor of the gas turbine (in this respect see, for example, U.S. Pat. No. 5,832,712 and WO 2009/098128), it still remains fairly low (about 6-10% by volume). And, due to somewhat lower isentropic exponent (also known as ratio of specific heat) of the flue gas compared to pure air, penalties in power and efficiency are expected for natural gas fired power plants when exhaust gas recirculation is employed. For the same reason, it is less than ideal to compress a mixture of flue gas and air in the gas turbine compressor. These factors significantly increase the cost of electricity generation. In fact, the cost of CO₂ capture is generally estimated to represent three-fourths of the total cost of a carbon capture, storage, transport, and sequestration.

As a result, there is a continuing need for cost-effective CO₂ removal technologies.

### BRIEF DESCRIPTION

The present invention is defined in the accompanying claims.

In one embodiment, a method for reducing CO₂ emissions in an exhaust stream is provided. The method comprises generating an exhaust stream, and compressing the stream. A first flow path of the compressed exhaust stream is recirculated back to the generating step. A second flow path of the compressed stream is provided to a separator where CO₂ is then separated from the compressed exhaust stream to provide a substantially CO₂ free exhaust stream and a stream of liquid CO₂.

An industrial plant is also provided. The plant comprises a manufacturing assembly for producing a product and an exhaust stream comprising CO₂ and further comprises a compressor, recirculation line and carbon dioxide separation system. The compressor receives the exhaust stream comprising CO₂ and generates a compressed exhaust gas. The compressor comprises a first conduit configured to recirculate a first flow path of the compressed exhaust gas to an upstream point in the manufacturing assembly. The compressor further comprises a second conduit configured to provide a second flow path of the compressed exhaust gas to the CO₂ separation system. The CO₂ separation system is configured to receive the compressed exhaust gas and generate a substantially CO₂ free exhaust stream and stream of liquid CO₂.

A natural gas combined cycle power plant is also provided. The plant comprises a semi-open combustion cycle and a closed steam cycle and in operation generates an exhaust stream comprising CO₂. The plant further comprises at least one compressor downstream of the combustion cycle and steam cycle, as well as a CO₂ separator. The compressor is coupled to a recirculation line that fluidly connects the compressor with the open combustion cycle. The compressor is also fluidly connected to the CO2 separator.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
Figure 1 is a schematic illustration of a natural gas combined cycle power plant in accordance with one embodiment;
Figure 2 is a schematic illustration of a natural gas combined cycle power plant in accordance with another embodiment;
Figure 3 is a schematic illustration of a natural gas combined cycle power plant in accordance with another embodiment;
Figure 4 is a schematic illustration of a natural gas combined cycle power plant in accordance with another embodiment; and
Figure 5 is a schematic illustration of a cascade plant in accordance with yet another embodiment

### DETAILED DESCRIPTION

Any compositional ranges disclosed herein are inclusive and combinable (e.g., ranges of "up to about 25 wt%", or, more specifically, "about 5 wt% to about 20 wt%", are inclusive of the endpoints and all intermediate values of the ranges). Weight levels are provided on the basis of the weight of the entire composition, unless otherwise specified; and ratios are also provided on a weight basis. Moreover, the term "combination" is inclusive of blends, mixtures, reaction products, and the like. Furthermore, the terms "first," "second," and the like, herein do not denote any order, quantity, or importance, but rather are used to distinguish one element from another.

The terms "a" and "an" herein do not denote a limitation of quantity, but rather denote the presence of at least one of the referenced items. The modifier "about" used in connection with a quantity is inclusive of the stated value, and has the meaning dictated by context, (e.g., includes the degree of error associated with measurement of the particular quantity). The suffix "(s)" as used herein is intended to include both the singular and the plural of the term that it modifies, thereby including one or more of that term (e.g., "the stream(s)" may include one or more streams).

Reference throughout the specification to "one embodiment", "another embodiment", "an embodiment", and so forth, means that a particular element (e.g., feature, structure, and/or characteristic) described in connection with the embodiment is included in at least one embodiment described herein, and may or may not be present in other embodiments. In addition, it is to be understood that the described inventive features may be combined in any suitable manner in the various embodiments.

Provided herein are methods and systems for reducing CO₂ in emissions streams, e.g., of power plants. The present methods not only make use of exhaust gas recirculation, but also, compression of the exhaust gas. Importantly, the compression of the exhaust gas is done prior to the introduction thereof into the gas turbine compressor and/or its mixture with pure air. And so, penalties in power and efficiency that may otherwise be expected for natural gas fired power plants that employ exhaust gas recirculation due to lower ratio of specific heat of the exhaust gas as compared to pure air, can be minimized, or even eliminated.

The compression of the exhaust gas also serves to increase the pressure and thus, decrease the volume, of the exhaust gas. Recirculation of the compressed exhaust gas increases the concentration of CO₂ in the exhaust gas. As a result, removal of CO₂ from the exhaust gas is thus simplified, and the capital and energy expenditures required to do so reduced as compared to those associated with CO₂ removal from a non-compressed exhaust gas, since less energy may be required to freeze out the CO₂ from a compressed exhaust gas stream as compared to a non-compressed exhaust stream. Finally, the CO₂ is cryogenically separated at pressures greater than or equal to ambient pressure, but lower than the pressure at the triple point of CO2. And so, the recovered CO₂ can be pumped to its final pressure, rather than compressed.

As a result, the methods and plants disclosed herein may use at least 10% less energy, or at least 20% less, or even at least 30% less, than conventional methods and plants that provide from the removal of CO2 from an exhaust stream. These energy savings can be further maximized in those embodiments of the methods and/or plants wherein heat is recovered from the hot exhaust gas.

The present methods comprise generating an exhaust stream comprising CO₂. The exhaust stream is compressed and recycled to increase the CO₂ concentration therein. Generally speaking, any amount of compression that will provide even a minimal increase in pressure in the exhaust stream may be used, and the exact amount may be dictated by the initial concentration of CO₂, the other components in the exhaust stream, the CO₂ separation mechanism desirably employed, and the like. On the other hand, in those embodiments wherein the CO₂ separation mechanism desirably comprises a cryogenic separator, the exhaust gas will desirably not be compressed to a pressure greater than the triple point of CO₂, i.e., about 5 atmospheres.

A first flow path of the compressed exhaust stream is recirculated back to the generating step. The particular amount of the compressed exhaust stream recirculated in the first flow path can be selected based upon the increase in CO₂ concentration in the exhaust gas desired. Generally speaking, increases in CO₂ concentration in the exhaust stream may be expected to be seen when at least about 10%, or about 20%, or about 30%, or about 40%, or even up to about 50% of the compressed exhaust stream is recirculated to the generating step.

A second flow path of the compressed exhaust stream is provided to a separator where CO₂ is then separated from the compressed exhaust stream to provide a substantially CO₂ free exhaust stream and liquid CO₂. The separator desirably comprises a cryogenic separator, also commonly referred to as a "CO₂ freeze out unit", either used alone, or in combination with other CO₂ separation processes such as CO₂ selective membrane technologies, sorption processes (adsorption and/or absorption), diaphragms, and the like. Such methods, as well as the parameters for their operation, are well known to those of ordinary skill in the art. Examples of suitable membrane technologies and details of their use are disclosed in US Patent Publication Nos. 2008/0104958 and 2008/0127632 to Finkenrath, which publications are hereby incorporated herein by reference to the extent that they do not conflict with the teachings herein.

In some embodiments, one or more cryogenic separators are used to remove CO₂ from the exhaust stream. Cryogenic separators for the removal of CO₂ are known in the art, many are commercially available, and any of these may be utilized in the methods. As is known to those of ordinary skill in the art, cryogenic separators operate by "freezing out" the CO₂ as a solid from the compressed exhaust stream. The CO₂ "snow" is then collected, compressed and melted. The melted CO₂ is then pumped to its final pressure for storage or use.

Because of the cost and energy savings they provide, the present methods are advantageously incorporated into industrial processes and plants that generate exhaust streams comprising CO₂. Further, the methods are easy to implement on all existing and future power plants, as no integration with the main power system is required. In some embodiments, such industrial plants may incorporate a heat exchanger, which may be integrated with the main power system, if desired. Such integration could lead to a reduction of the power requirement needed to drive the other components of the industrial plant, or even help to make the CO₂ separation components energy self-sustainable.

Examples of industrial plants that could benefit from incorporation of the principles described include combustion processes, such as coal fired power plants, oil-fired boilers, cement or steel factories, etc. Generally speaking, such plants will comprise a manufacturing assembly for producing a product and an exhaust stream comprising CO₂. Such plants will further desirably comprise a compressor, recirculation line and carbon dioxide separation system. The compressor receives the exhaust stream comprising CO₂ and generates a compressed exhaust gas. The compressor comprises a first conduit configured to recirculate a first flow path of the compressed exhaust gas to an upstream point in the manufacturing assembly. The compressor further comprises a second conduit configured to provide a second flow path of the compressed exhaust gas to the CO₂ separation system. The CO₂ separation system is configured to receive the compressed exhaust gas and generate a substantially CO₂ free exhaust stream and stream of liquid CO₂.

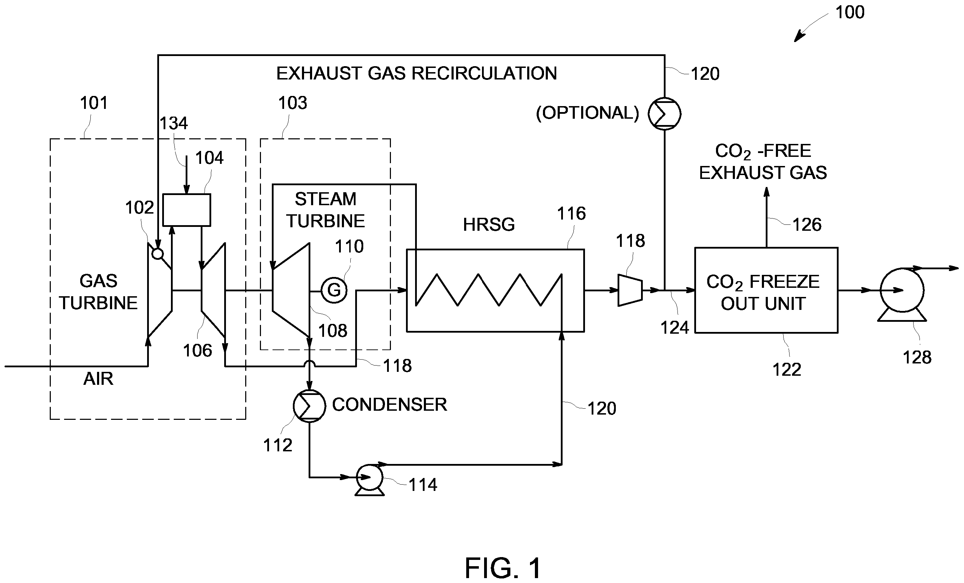

One particular class of industrial plants that could benefit from incorporation of the methods and principles described herein includes natural gas power plants, e.g., natural gas combined cycle power plants. FIG. 1 is a schematic illustration of one embodiment of natural gas combined cycle power plant.

Plant 100 includes a semi-open combustion cycle 101, comprising first second compressor 102, natural gas inlet 134, combustor 104 and expander 106, and a closed steam cycle 103, comprising steam turbine 108, and generator 110. Semi-open combustion cycle 101 and closed steam cycle are mounted on the same shaft, and so, as shown in FIG. 1, are mechanically connected, but are not fluidly connected.

Plant 100 further comprises heat exchanger 116. Heat exchanger 116 is in flow communication with expander 106 and steam turbine 108. In operation, the relatively hot exhaust stream discharged from expander 106 is channeled through heat exchanger 116. The heat energy from the hot exhaust stream is transferred to the working fluid flowing through heat exchanger 116, e.g., in some embodiments a heat recovery steam generator, or HRSG, to generate steam that is used to produce further power in steam turbine 108. In some embodiments, heat exchanger 116 is a noncontact heat exchanger, i.e., in which water or steam from closed steam cycle 103 is provided to and passed through tubes (not shown) in heat exchanger 116 via conduit 120 and exhaust gas from semi-open combustion cycle 101 is provided to and passes around the tubes (not shown) within heat exchanger 116 via conduit 118.

A condenser 112 can be located downstream from steam turbine 108 to convert the stream discharged from steam turbine 108 to water by lowering the temperature. A pump 114 may also be employed downstream of the condenser 112 to increase the pressure of the water prior to entry into the heat exchanger 116.

Cooled exhaust gas exits heat exchanger 116 and is provided to first compressor 118. In the embodiment shown in Figure 1, downstream of first compressor 118, a first flow of the compressed exhaust gas is recirculated through conduit 120 back and to semi-open combustion cycle 101, and more particularly, to second compressor 102. In some embodiments, up to about 20 volume %, or about 30 volume %, or about 40 volume %, or even up to about 50 volume % of the compressed exhaust stream can be recycled to enter open combustion cycle 101 with air at second compressor 102. Compressing the exhaust stream prior to the inlet of first compressor 102 increases the CO₂ concentration in the working fluid, thereby increasing the driving forces for the CO₂ separation in CO₂ separation unit 122.

A second flow of compressed exhaust gas is provided to CO₂ separation unit 122 from first compressor 118 via conduit 124. In some embodiments, CO₂ separation unit 122 comprises a CO₂ cryogenic separator, either used alone, or in combination with other CO₂ separation processes such as CO₂ selective membrane technologies, sorption processes (adsorption and/or absorption), diaphragms, and the like. CO₂ membrane technologies are disclosed, for example, in US Patent Publication Serial No. 2008/0134660, hereby incorporated herein by reference in its entirety.

CO₂ separation unit 122 produces a substantially CO₂-free exhaust gas, discharged out conduit 126, and the frozen out CO₂ collected, compressed, melted and delivered to pump 128 where it is pumped to supercritical pressure for transport via conduit 130.

Natural gas combined cycle plant 100 is operated as known in the art, and as such, produces an exhaust stream having a temperature of from about 600 degrees Fahrenheit (°F) (316 degrees Celsius (°C)) to about 1,300°F (704°C). The exhaust stream discharged from open combustion cycle 101 is channeled through heat exchanger 116 wherein a substantial portion of the heat energy from the exhaust stream is transferred to the closed steam cycle 103, with the working fluid channeled therethrough to generate steam that can be utilized to drive steam turbine 108 and generator 110. In other embodiments, the exhaust stream can be simply cooled without utilizing the heat rejected to useful purpose, and/or it can be linked to another process to provide heat in the form of steam or hot water.

Heat exchanger 116 facilitates reducing the operational temperature of the exhaust stream to a temperature that is between about 75°F (24°C) and about 248°F (120°C). In some embodiments, heat exchanger 116 facilitates reducing the operational temperature of the exhaust stream to a temperature that is approximately 100°F (38°C).

The relatively cool dry exhaust stream is then compressed in first compressor 118. If desired, prior to providing the exhaust stream to first compressor 118, the temperature thereof may be further reduced by passing the exhaust stream through a heat exchanger, wet scrubber, or the like (not shown). In some embodiments, such a heat exchanger/wet scrubber (not shown) can be used to condense the water present in the exhaust gas as well as to reduce the temperature of the exhaust stream, e.g., to about 40°C, so that the compression power required is reduced.

First compressor 118 will desirably be utilized to increase the operating pressure of the exhaust stream channeled there through to a pressure that is up to about four or five times greater than the operating pressure of the exhaust stream discharged from heat exchanger 116. Moreover, channeling the exhaust stream through first compressor 118 causes the temperature of the exhaust stream to increase. And so in some embodiments, once discharged from first compressor 118, the exhaust stream may optionally be passed through heat exchanger or wet scrubber to reduce the temperature thereof.

Such a heat exchanger may be operatively disposed relative to conduit 124 or conduit 120, as desired. When operatively disposed relative to conduit 124, such a heat exchanger or wet scrubber may facilitate reducing the operational temperature of the exhaust stream, which in turn, may be advantageous for operating CO₂ separation unit 122.

The CO₂ rich exhaust stream discharged from first compressor 118 enters the CO₂ separation unit 122 via conduit 124. As described above, CO₂ separation unit 122 comprises a CO₂ freeze out unit, either used alone, or in combination with other CO₂ separation processes such as CO₂ selective membrane technologies, sorption processes (adsorption and/or absorption), diaphragms, and the like.

The CO₂ freeze out unit comprises an advanced refrigerant process, preferably a mixed-refrigerant cycle, which is able to reduce the temperature of an exhaust stream down to -150°C and frost CO₂ at pressures greater or equal to atmospheric, but lower than the pressure at the triple point of CO₂. As the CO₂ freezes, it is separated from the substantially CO₂ free exhaust stream. Subsequently the solid CO₂ is collected and melted, using for instance the low-temperature heat from the exhaust stream. Once the CO₂ is in liquid state, it is pumped to a supercritical pressure, which is required for transport, sequestration and reinjection purposes.

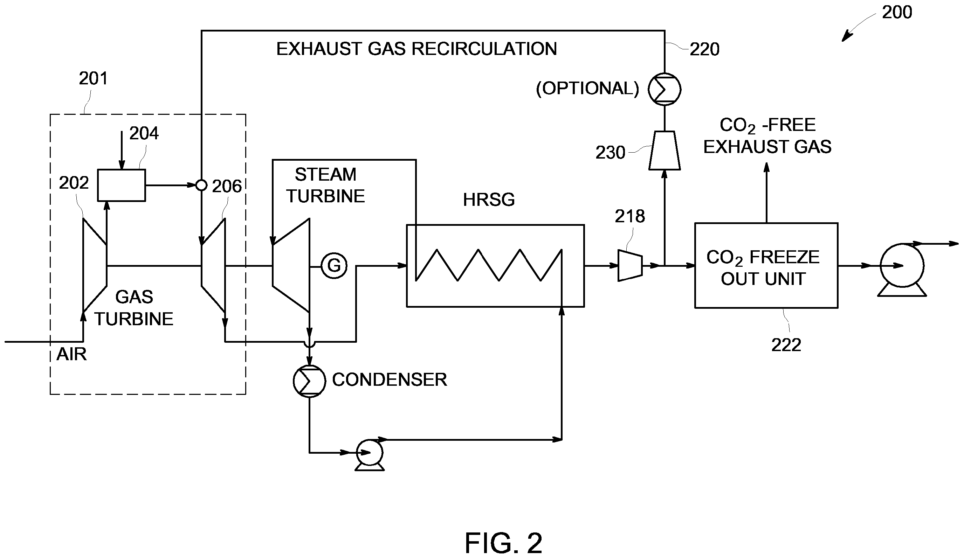

Figure 2 is a schematic illustration of an exemplary natural gas combined cycle plant 200 according to another embodiment. In addition to those components described above in connection with Figure 1, plant 200 comprises additional, third compressor 230 to further compress the exhaust gas in recirculation line 220. And, the compressed, recycled exhaust gas is combined with compressed air at an inlet to expander 206.

The introduction of compressed air at an inlet to expander 206 process can act to cool down the blades of the expander, reducing or eliminating to divert air from compressor. That is, since the pressure of the exhaust gas exiting first compressor 218 is limited by the pressure acceptable within CO₂ separation unit 222 to the pressure at the triple point of CO₂, or to about 5 atmospheres, the pressure of the exhaust gas recirculated and added to semi-open combustion cycle 201 after combustor 204 and prior to expander 206 must be raised to substantially equivalent to the pressure within expander 206, e.g, to about 20 to 40 atmospheres, or flow in the conduit 220 will reverse. Compressed exhaust gas can also cool down the blades of expander 206, and reduce or eliminate the need to divert air from compressor 202 for this purpose. As a result, this embodiment can provide further reductions in penalties to semi-open combustion cycle 201.

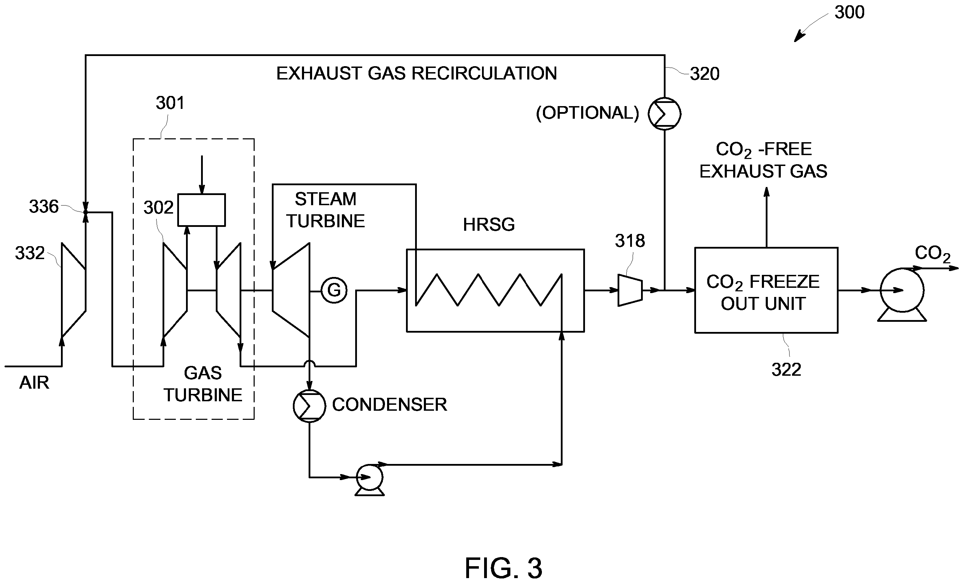

Figure 3 is a schematic illustration of an exemplary natural gas combined cycle plant 300 according to another embodiment. In addition to those components described above in connection with Figure 1, plant 300 comprises additional compressor 332 to compress inlet air to a pressure substantially equivalent to that of the compressed, recycled exhaust gas. The compressed air and compressed recycled exhaust gas are combined at valve 336, prior to introduction into semi-open combustion cycle 301 at compressor 302.

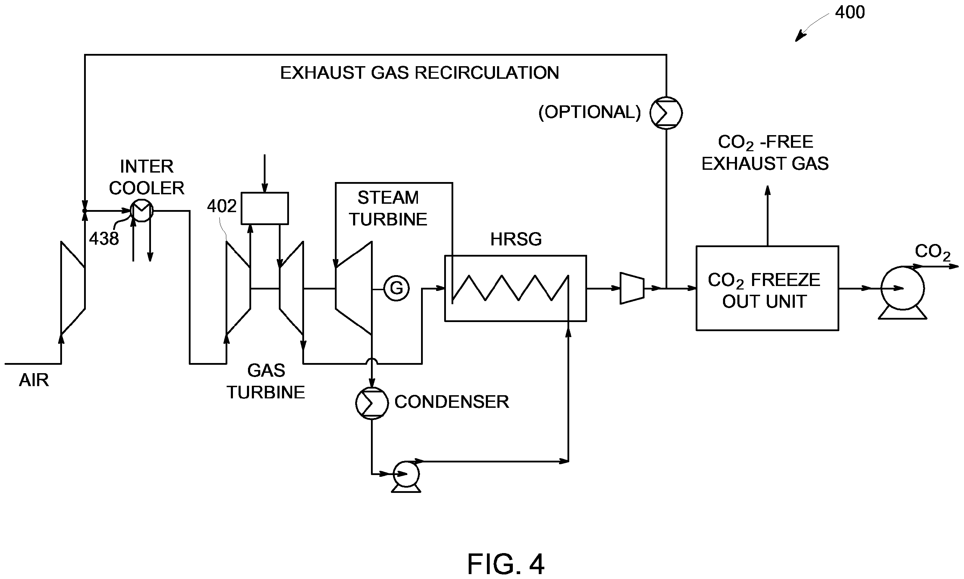

Figure 4 is a schematic illustration of an exemplary industrial plant according to another embodiment. In addition to those components described above in connection with Figure 3, plant 400 comprises intercooler 438. In operation, compressed air and compressed recycled exhaust gas are combined at valve 436, prior to introduction into intercooler 438. Intercooler 438 operates to decrease the temperature of the low-pressure compressed gas mixture prior to further compression in second compressor 402. As the temperature of the gas mixture decreases, so does the compression work of second compressor 402. Thus, an intercooled gas turbine cycle might have higher efficiency than non intercooled gas turbine cycles for the same compression ratio. In the exemplary embodiment, the plant 400 may comprise an LMS100 available from General Electric Aircraft Engines, Cincinnati, Ohio.

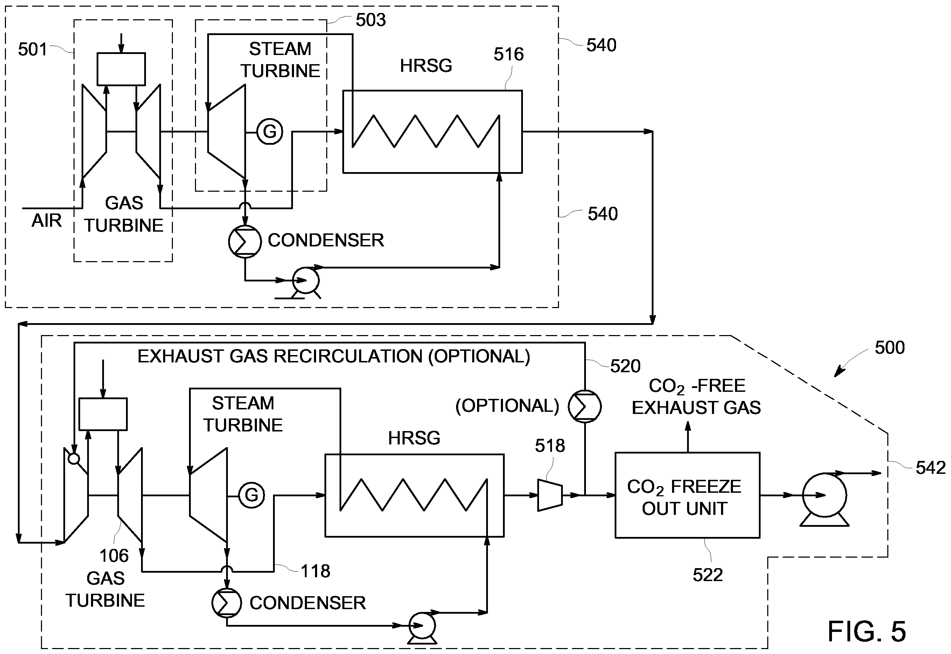

Figure 5 is a schematic illustration of another embodiment. More particularly, Figure 5 shows cascade plant 500, wherein two gas turbine power plants, upstream plant 540 and downstream plant 542, are configured in series. In the embodiment shown, downstream plant 542 is provided with first compressor 518, conduit 520 and CO₂ separation unit 522. The advantage of this configuration is that the concentration of CO₂ and partial pressure in the exhaust stream of downstream plan 542 increases relative to that of a single natural gas combined cycle plant, which facilitates the CO₂ separation process.

Upstream plant 540 is operated as known in the art, and as such, produces an exhaust stream having a temperature of from about 600 degrees Fahrenheit (°F) (316 degrees Celsius (°C)) to about 1,300°F (704°C). The exhaust stream discharged from semi-open combustion cycle 501 is channeled through heat exchanger 516 wherein a substantial portion of the heat energy from the exhaust stream is transferred to the closed steam cycle 503. More particularly, Heat exchanger 516 facilitates reducing the operational temperature of the exhaust stream to a temperature that is between about 75°F (24°C) and about 248°F (120°C), or to a temperature of about 100°F (38°C). The exhaust stream from upstream plant 540, and more particularly, heat exchanger 516, is provided to downstream plant 542, which then operates substantially as described above in connection with Figure 1.

## Claims

1. A natural gas combined cycle power plant that generates an exhaust stream comprising CO₂, the plant comprising
a semi-open combustion cycle (101);
a closed steam cycle (103);
a CO₂ separator (122); and
at least one first compressor (118) operatively disposed downstream of the open combustion cycle and the closed steam cycle and coupled to (i) a recirculation line (120) that fluidly connects the compressor (118) with the semi-open combustion cycle (101) and (ii) a conduit that fluidly connects the compressor (118) to the CO₂ separator;
wherein at least one of the recirculation line (120) and air are introduced into a second compressor (120) before being recycled to a generator (110), wherein the second compressor (102) is coupled to a turbine (108).

2. The plant of claim 1, wherein the semi-open combustion cycle (101) comprises a combustor (104) and an expander (106), and wherein the recirculation line (120) is fluidly connected to an inlet of the expander (106).

3. The plant of claim 1, further comprising an inlet air compressor operatively disposed upstream of the open combustion cycle (101), and wherein the recirculation line (120) is fluidly connected to a valve operatively disposed between the air compressor and the open combustion cycle.

4. The plant of claim 3, further comprising an intercooler operatively disposed between the valve and the open combustion cycle.

5. The plant of claim 1, further comprising at least one heat exchanger (116).

6. The plant of claim 5, wherein the at least one heat exchanger (116) is operatively disposed relative to the recirculation line (120).

7. The plant of claim 5, wherein the at least one heat exchanger (116) is operatively disposed relative to the first compressor, the CO₂ separator, or both.

8. The plant of claim 1, operatively disposed relative to at least one other natural gas combined cycle power plant.

9. An industrial plant for producing a product and an exhaust stream comprising CO₂, the industrial plant comprising:
a manufacturing assembly for producing a product and an exhaust stream comprising CO₂; and
the plant of any preceding claim.

10. A method for reducing CO₂ emissions in an exhaust stream, the method comprising:
generating an exhaust stream via generator (110);
compressing the exhaust stream in a first compressor (118);
recycling a first flow path of the compressed exhaust stream to the generator (110), wherein at least one of the first flow path of the compressed exhaust stream or a flow of air is flowed through a second compressor prior to being recycled to the generator, wherein the second compressor is coupled to a turbine (108); and
separating CO₂ from a second flow of the compressed exhaust stream to produce a liquid CO₂ stream and a substantially CO₂ free exhaust stream.

11. The method of claim 10, wherein the CO₂ is separated from the second flow of the compressed exhaust stream using a cryogenic separator.

12. The method of claim 11, wherein the exhaust stream is compressed to a pressure of less than 5 atmospheres.

13. The method of claim 12, wherein the exhaust stream is compressed to a pressure of from 1 atmospheres to 4 atmospheres.

14. The method of claim 10, wherein up to 50% of the compressed exhaust stream is recycled in the first flow path.

## Patentansprüche

1. Erdgas-Kombikraftwerk, das einen Abgasstrom erzeugt, der CO₂ umfasst, wobei das Kraftwerk umfasst
einen halboffenen Verbrennungskreislauf (101);
einen geschlossenen Dampfkreislauf (103);
einen CO₂-Abscheider (122), und
mindestens einen ersten Kompressor (118), der betriebsbereit stromabwärts des offenen Verbrennungskreislaufs und des geschlossenen Dampfkreislaufs angeordnet ist und an (i) eine Rücklaufleitung (120), die den Kompressor (118) strömungstechnisch mit dem halboffenen Verbrennungskreislauf (101) verbindet, und (ii) eine Leitung, die den Kompressor (118) strömungstechnisch mit dem CO₂-Abscheider verbindet, gekoppelt ist;
wobei mindestens eine von der Rücklaufleitung (120) und Luft vor einem Rücklauf zu einem Generator (110) in einen zweiten Kompressor (120) geleitet wird, wobei der zweite Kompressor (102) an eine Turbine (108) gekoppelt ist.

2. Kraftwerk nach Anspruch 1, wobei der halboffene Verbrennungskreislauf (101) eine Brennkammer (104) und einen Expander (106) umfasst und wobei die Rücklaufleitung (120) strömungstechnisch mit einem Einlass des Expanders (106) verbunden ist.

3. Kraftwerk nach Anspruch 1, des Weiteren umfassend einen Einlassluftkompressor, der betriebsbereit stromaufwärts des halboffenen Verbrennungskreislaufs (101) angeordnet ist und wobei die Rücklaufleitung (120) strömungstechnisch mit einem Ventil verbunden ist, das betriebsbereit zwischen dem Luftkompressor und dem offenen Verbrennungskreislauf angeordnet ist.

4. Kraftwerk nach Anspruch 3, des Weiteren umfassend einen Zwischenkühler, der betriebsbereit zwischen dem Ventil und dem offenen Verbrennungskreislauf angeordnet ist.

5. Kraftwerk nach Anspruch 1, des Weiteren umfassend mindestens einen Wärmetauscher (116).

6. Kraftwerk nach Anspruch 5, wobei der mindestens eine Wärmetauscher (116) betriebsbereit relativ zur Rücklaufleitung (120) angeordnet ist.

7. Kraftwerk nach Anspruch 5, wobei der mindestens eine Wärmetauscher (116) betriebsbereit relativ zu dem ersten Kompressor, dem CO₂-Abscheider oder beiden angeordnet ist.

8. Kraftwerk nach Anspruch 1, das betriebsbereit relativ zu mindestens einem anderen Erdgas-Kombikraftwerk angeordnet ist.

9. Industrieanlage zum Produzieren eines Produkts und eines Abgasstroms, der CO₂ umfasst, wobei die Industrieanlage umfasst:
eine Fertigungsanordnung zum Produzieren eines Produkts und eines Abgasstroms, der CO₂ umfasst; und
das Kraftwerk nach einem vorangehenden Anspruch.

10. Verfahren zur Verringerung von CO₂-Emissionen in einem Abgasstrom, wobei das Verfahren umfasst:
Generieren eines Abgasstroms mittels eines Generators (110);
Komprimieren des Abgasstroms in einem ersten Kompressor (118);
Rückleiten eines ersten Strömungspfades des komprimierten Abgasstroms zum Generator (110), wobei mindestens einer von dem ersten Strömungspfad des komprimierten Abgasstroms oder eines Luftstroms vor einer Rückleitung zum Generator durch einen zweiten Kompressor strömt, wobei der zweite Kompressor an eine Turbine (108) gekoppelt ist; und
Abscheiden von CO₂ von einem zweiten Strom des komprimierten Abgasstroms, um einen Flüssig-CO₂-Strom und einen im Wesentlichen CO₂-freien Abgasstrom zu produzieren.

11. Verfahren nach Anspruch 10, wobei das CO₂ aus dem zweiten Strom des komprimierten Abgasstroms unter Verwendung eines kryogenen Abscheiders abgeschieden wird.

12. Verfahren nach Anspruch 11, wobei der Abgasstrom auf einen Druck von weniger als 5 Atmosphären komprimiert wird.

13. Verfahren nach Anspruch 12, wobei der Abgasstrom auf einen Druck von 1 Atmosphäre bis 4 Atmosphären komprimiert wird.

14. Verfahren nach Anspruch 10, wobei bis zu 50 % des komprimierten Abgasstroms im ersten Strömungspfad zurückgeleitet werden.

## Revendications

1. Centrale électrique au gaz naturel à cycles combinés, qui génère un courant d'échappement comprenant du CO₂, la centrale comprenant :
un cycle de combustion semi-ouvert (101) ;
un cycle de vapeur fermé (103) ;
un séparateur de CO₂ (122) ; et
au moins un premier compresseur (118) disposé en service en aval du cycle de combustion ouvert et du cycle de vapeur fermé et couplé à (i) une conduite de remise en circulation (120) qui raccorde en communication fluidique le compresseur (118) au cycle de combustion semi-ouvert (101) et (ii) un conduit qui raccorde en communication fluidique le compresseur (118) au séparateur de CO₂;
dans laquelle au moins l'un(e) de la conduite de remise en circulation (120) et de l'air est introduit(e) dans un second compresseur (120) avant d'être recyclé à un générateur (110), dans laquelle le second compresseur (102) est couplé à une turbine (108).

2. Centrale selon la revendication 1, dans laquelle le cycle de combustion semi-ouvert (101) comprend un système de combustion (104) et un expanseur (106), et dans laquelle la conduite de remise en circulation (120) est raccordée en mode fluidique à une entrée de l'expanseur (106).

3. Centrale selon la revendication 1, comprenant en outre un compresseur d'air d'entrée disposé en service en amont du cycle de combustion ouvert (101), et dans laquelle la conduite de remise en circulation (120) est raccordée en mode fluidique à une soupape disposée en service entre le compresseur d'air et le cycle de combustion ouvert.

4. Centrale selon la revendication 3, comprenant en outre un dispositif de refroidissement intermédiaire disposé en service entre la soupape et le cycle de combustion ouvert.

5. Centrale selon la revendication 1, comprenant en outre au moins un échangeur de chaleur (116).

6. Centrale selon la revendication 5, dans laquelle le au moins un échangeur de chaleur (116) est disposé en service par rapport à la conduite de remise en circulation (120).

7. Centrale selon la revendication 5, dans laquelle le au moins un échangeur de chaleur (116) est disposé en service par rapport au premier compresseur, au séparateur de CO₂, ou aux deux.

8. Centrale selon la revendication 1, disposée en service par rapport à au moins une autre centrale électrique au gaz naturel à cycles combinés.

9. Installation industrielle pour élaborer un produit et un courant d'échappement comprenant du CO₂, l'installation industrielle comprenant :
un ensemble de fabrication pour élaborer un produit et un courant d'échappement comprenant du CO₂; et
la centrale selon l'une quelconque des revendications précédentes.

10. Procédé de réduction des émissions de CO₂ dans un courant d'échappement, le procédé comprenant :
la génération d'un courant d'échappement via un générateur (110) ;
la compression du courant d'échappement dans un premier compresseur (118) ;
le recyclage d'un premier trajet d'écoulement du courant d'échappement comprimé au générateur (110), dans lequel au moins l'un du premier trajet d'écoulement du courant d'échappement comprimé ou d'un écoulement d'air s'écoule à travers un second compresseur avant d'être recyclé au générateur, dans lequel le second compresseur est couplé à une turbine (108) ; et
la séparation de CO₂ d'un second écoulement du courant d'échappement comprimé pour produire un courant de CO₂ liquide et un courant d'échappement sensiblement exempt de CO₂.

11. Procédé selon la revendication 10, dans lequel le CO₂ est séparé du second écoulement du courant d'échappement comprimé en utilisant un séparateur cryogénique.

12. Procédé selon la revendication 11, dans lequel le courant d'échappement est comprimé à une pression inférieure à 5 atmosphères.

13. Procédé selon la revendication 12, dans lequel le courant d'échappement est comprimé à une pression de 1 atmosphère à 4 atmosphères.

14. Procédé selon la revendication 10, dans lequel une proportion allant jusqu'à 50 % du courant d'échappement comprimé est recyclée dans le premier trajet d'écoulement.
